(19) Europäisches Patentamt
European Patent Office
Office européen des brevets

(11) **EP 4 386 450 A1**

(12) **EUROPEAN PATENT APPLICATION**
published in accordance with Art. 153(4) EPC

(43) Date of publication:
**19.06.2024 Bulletin 2024/25**

(21) Application number: **22878134.0**

(22) Date of filing: **25.03.2022**

(51) International Patent Classification (IPC):
**G01S 19/40** (2010.01)   **G01S 19/45** (2010.01)

(52) Cooperative Patent Classification (CPC):
**G01S 19/40; G01S 19/45**

(86) International application number:
**PCT/JP2022/014317**

(87) International publication number:
**WO 2023/058261 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.10.2021   JP 2021166071**

(71) Applicant: **Tokyo Keiki Inc.
Tokyo, 144-0035 (JP)**

(72) Inventors:
• **ARAKANE, Hiroomi
Tokyo 144-0035 (JP)**
• **KAYA, Kazuki
Tokyo 144-0035 (JP)**

(74) Representative: **Bandpay & Greuter
11 rue Christophe Colomb
75008 Paris (FR)**

(54) **POSITION CORRECTION DEVICE**

(57) Provided is a position correction apparatus which includes: a predictive position calculation unit structured to calculate a predictive position of a mobile object, with reference to a speed of the mobile object having been acquired in a current cycle; an error judging unit structured to calculate a relative position vector that indicates a relative position between a GNSS position acquired in a current cycle and a predictive position derived from the speed having been acquired for the previous time, and to judge that the acquired GNSS position is free of error, if the speed of change, from a relative position vector having been calculated in a cycle prior to the previous time, to the relative position vector calculated in the current cycle, is smaller than a predetermined speed threshold value; a correction amount calculation unit structured to calculate a correction speed vector which is a speed vector derived from the relative position vector, the relative position vector having been calculated for the previous time, and a duration of time from a time point the relative position vector was calculated for the previous time up to the current cycle, if the GNSS position has been judged to be free of error, and a current position calculation unit structured to calculate, as the current position of the mobile object, a position obtained by correcting the predictive position calculated in the current cycle, with an integrated value of the correction speed vector.

FIG.2

EP 4 386 450 A1

**Description**

TECHNICAL FIELD

Embodiments of this invention relate to a technology for correcting position measured with GNSS (Global Navigation Satellite System).

BACKGROUND ART

Prior position measurement of a mobile object with use of GNSS has suffered from a phenomenon called "position jump", which is a large deviation of a measurement position typically caused by blocking of radio wave from a GNSS satellite, multipath, or satellite switching.

One known technology for reducing such positional error due to position jump relates to a position output apparatus which is structured to judge whether position jump has occurred or not, from a difference between a current position derived from positional data obtained from satellite navigation measurement, and a predictive position derived from a prior current position; to calculate a correction position vector for correcting the current position, if the position jump was judged to have occurred, and to determine a current position by correcting the predictive position with the correction position vector (see Patent Literature 1).

CITATION LIST

PATENT DOCUMENT

[Patent Document 1] JP 5122678 B

SUMMARY OF THE INVENTION

TECHNICAL PROBLEM

The aforementioned position output apparatus, although capable of correcting a position jump which is larger than a preset threshold value, has however suffered from a problem that a position jump smaller than the threshold value, or more minor positional error such as deviation which gradually develops from a proper position cannot be corrected.

Aimed at solving the aforementioned problem, it is therefore an object of embodiments of the present invention to provide a technique capable of reducing more minor positional error.

SOLUTION TO PROBLEM

One embodiment relates to a position correction apparatus structured to correct a current position of a mobile object output from a GNSS receiver, the apparatus including: a data acquisition unit structured to periodically acquire a GNSS position output from the GNSS receiver and speed of the mobile object; a predictive position calculation unit structured to calculate a predictive position of the mobile object, with reference to the speed of the mobile object having been acquired for the previous time; an error judging unit structured to calculate a relative position vector that indicates a relative position between a GNSS position acquired in a current cycle and a predictive position derived from the speed of the mobile object having been acquired for the previous time, and to judge that the acquired GNSS position is free of error, if the speed of change, from a relative position vector having been calculated in a cycle prior to the previous time, to the relative position vector calculated in the current cycle, is smaller than a predetermined speed threshold value; a correction amount calculation unit structured to calculate a correction speed vector which is a speed vector derived from the relative position vector calculated in the current cycle, the relative position vector having been calculated for the previous time, and a duration of time from a time point the relative position vector was calculated for the previous time up to the current cycle, if the GNSS position has been judged to be free of error; and a current position calculation unit structured to calculate, as the current position of the mobile object, a position obtained by correcting the predictive position calculated in the current cycle, with an integrated value of the correction speed vector.

BRIEF DESCRIPTION OF DRAWINGS

FIG. 1 is a block diagram illustrating a hardware configuration of a position correction apparatus according to a first embodiment.

FIG. 2 is block diagram illustrating a functional configuration of the position correction apparatus according to the first embodiment.

FIG. 3 is a flow chart illustrating operations of the position correction apparatus according to the first embodiment.

FIG. 4 is a flow chart illustrating operations of an error judgment process.

FIG. 5 is a flow chart illustrating operations of a correction speed vector calculation process.

FIG. 6 is a flow chart illustrating operations of an initialization process according to the first embodiment.

FIG. 7 is a block diagram illustrating a hardware configuration of a position correction apparatus according to a second embodiment.

FIG. 8 is a block diagram illustrating a hardware configuration of an inertial measurement unit.

FIG. 9 is a block diagram illustrating a functional configuration of the position correction apparatus according to the second embodiment.

FIG. 10 is a flow chart illustrating operations of the position correction apparatus according to the second embodiment.

FIG. 11 is a flow chart illustrating operations of an initialization process according to the second embodiment.

DESCRIPTION OF EMBODIMENTS

Embodiment of the present invention will be explained below, referring to the attached drawings.

<First Embodiment>

(Structure of Position Correction Apparatus)

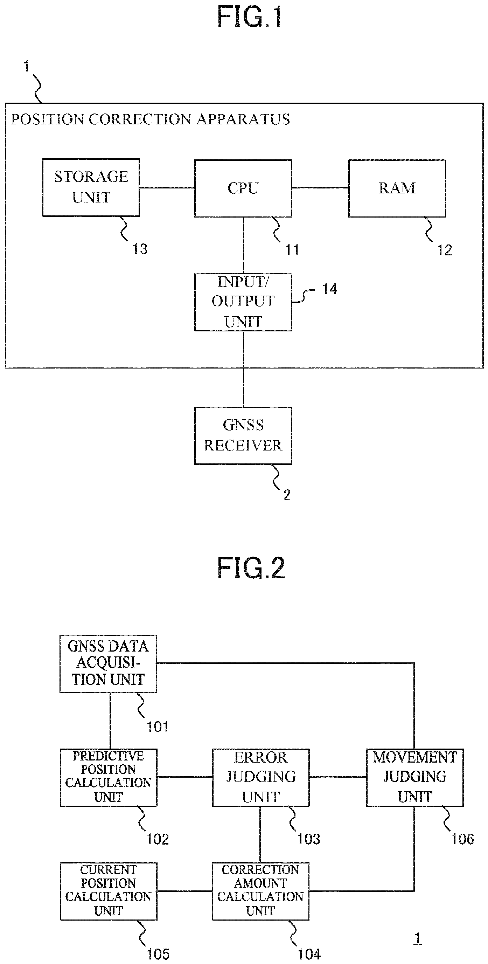

A structure of a position correction apparatus according to a first embodiment will be explained. FIGs. 1 and 2 are block diagrams illustrating a hardware configuration and a functional configuration, respectively, of a position correction apparatus according to this embodiment.

A position correction apparatus 1 according to this embodiment is an apparatus for correcting position information of a mobile object, mounted on a mobile object and is structured, as illustrated in FIG. 1, to enable sending/receiving of data to or from a GNSS receiver 2 which receives a GNSS signal. The position correction apparatus 1, although being mounted on the mobile object and wired with the GNSS receiver 2, may alternatively be disposed at a position apart from the mobile object, and may be wirelessly connected with the GNSS receiver 2.

As illustrated in FIG. 1, the position correction apparatus 1 has hardware including a CPU (Central Processing Unit) 11, a RAM (Random Access Memory) 12, a storage unit 13, and an input/output unit 14. The CPU 11 and the RAM 12 cooperate to implement various functions described later. The storage unit 13 stores various data used by the functions implemented by the CPU 11 and the RAM 12. The input/output unit 14 is an interface through which data is sent and received to or from an external device such as the GNSS receiver 2.

As illustrated in FIG. 2, the position correction apparatus 1 has functional units including a GNSS data acquisition unit 101, a predictive position calculation unit 102, an error judging unit 103, a correction amount calculation unit 104, a current position calculation unit 105, and a movement judging unit 106.

The GNSS data acquisition unit 101 acquires GNSS data output from the GNSS receiver 2 at regular refresh intervals (approximately 200 ms, for example), with reference to the GNSS signal. The GNSS data contains GNSS position that indicates position of the mobile object, and GNSS speed that indicates speed of the mobile object. The predictive position calculation unit 102 calculates a predictive position of the mobile object, from the GNSS data acquired by the GNSS data acquisition unit 101. The predictive position is a position of the mobile object generated by prediction. The error judging unit 103 judges whether the GNSS position is free of error or not, with reference to speed of change of a relative position vector that indicates relative position between the GNSS position and the predictive position.

If the GNSS position was judged to be free of error by the error judging unit 103, the correction amount calculation unit 104 calculates a correction speed vector with reference to the relative position vector. The current position calculation unit 105 calculates a current position of the mobile object, by correcting the predictive position with an integrated value of the correction speed vector. The movement judging unit 106 judges, in a later-described initialization process, whether the mobile object has moved or not.

(Operations of Position Correction Apparatus)

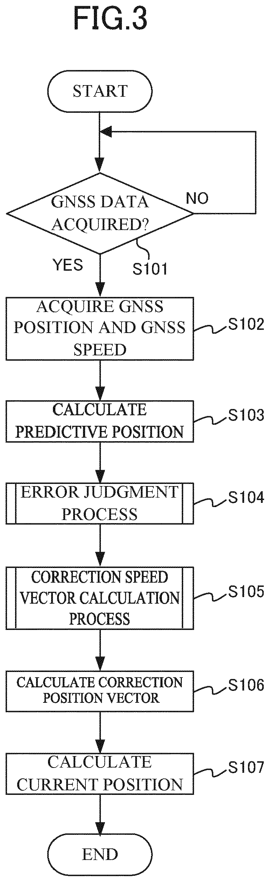

Operations of the position correction apparatus according to the first embodiment will be explained. FIG. 3 is a flow chart illustrating the operations of the position correction apparatus according to this embodiment. Note that the operations illustrated in FIG. 3 are on the premise of being preceded by an initialization process, which will be detailed later for the convenience of explanation. Also note that the operations illustrated in FIG. 3 are conducted at an operation cycle shorter than an output cycle of the GNSS data from the GNSS receiver.

First, as illustrated in FIG. 3, the GNSS data acquisition unit 101 judges whether the GNSS data output from the GNSS receiver 2 was acquired or not (S101).

If the GNSS data was acquired (S101, YES), the GNSS data acquisition unit 101 acquires the GNSS speed and the GNSS position of the mobile object contained in the GNSS data (S102).

After acquisition of the GNSS speed and the GNSS position, the predictive position calculation unit 102 calculates a predictive position $P_{PRE}$ which will be used for a subsequent operation cycle (S103). If the predictive position $P_{PRE}$ has not been calculated after startup of the position correction apparatus 1, the GNSS position is used as an initial value of the predictive position $P_{PRE}$.

The predictive position $P_{PRE}$ used for subsequent operation cycles is obtainable by adding a movement vector of the mobile object with reference to the GNSS speed, to the predictive position used in the current operation cycle, that is, the predictive position having been calculated for a prior operation cycle. More specifically, the predictive position $P_{PRE}$ is calculated by the equation below.

[Math. Formula 1]

$$\boldsymbol{P_{PRE}}(t) = \boldsymbol{P_{PRE}}(t - \delta t) + \boldsymbol{v}(t - \delta t) \cdot \delta t$$

In the equation, t represents a current time in terms of a duration of time from the startup of the position correction apparatus 1 up to the current operation cycle, and is specifically a value obtainable by multiplying the number of operation cycles and duration of each operation cycle. $\delta t$ represents an acquisition time, which corresponds to a duration of time from a time point the GNSS data was output for the previous time by the GNSS receiver 2, up to the current operation cycle. v(t) represents the GNSS speed at a time point t. Bold letters in the equation represent vectors. $P_{PRE}(t-\delta t)$ represents a predictive position calculated for the previous time, and $v(t-\delta t)$ represents a GNSS speed output for the previous time.

After calculation of the predictive position, the error judging unit 103 implements an error judgment process by which whether the GNSS position is free of error or not is judged, with reference to the predictive position having been calculated for the GNSS data acquired for the previous time (S104). The error judgment process will be detailed later.

After the error judgment process, by which the GNSS position was judged to be free of error, the correction amount calculation unit 104 calculates a correction speed vector $V_{cor}$, and implements a correction speed vector calculation process for setting reliability of the current position of the mobile object (S105).

After implementation of the correction speed vector calculation process, the current position calculation unit 105 integrates, over time, calculates the corrected position vector $P_{cor}$ by integrating the correction speed vector $V_{cor}$ obtained in a duration upon start of movement of the position correction apparatus 1 up to the current operation cycle, according to the equation below (S106).

[Math. Formula 2]

$$\boldsymbol{P_{cor}}(t) = \int_0^t \boldsymbol{V_{cor}}(t) dt$$

Next, the current position calculation unit 105 subtracts the correction position vector $P_{cor}$ from the predictive position $P_{PRE}$ in the current operation cycle, to estimate a corrected current position of the mobile object (S107).

Meanwhile, if the GNSS data was not acquired in step S101 (S101, NO), the GNSS data acquisition unit 101 judges again whether the GNSS data output from the GNSS receiver 2 was acquired or not (S101).

(Error Judgment Process)

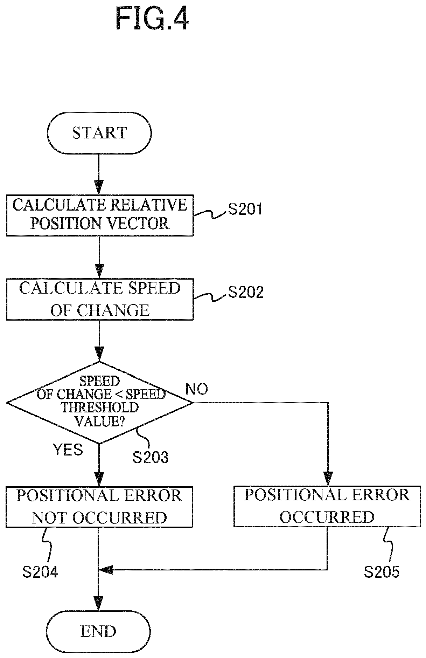

The error judgment process will be explained below. FIG. 4 is a flow chart illustrating operations of the error judgment process.

As illustrated in FIG. 4, first, the error judging unit 103 calculates a relative position vector $P_{GNSS\_PRE}$ that indicates a relative position between the GNSS position and the predictive position $P_{PRE}$ (S201). The relative position vector is a position vector having the start point fallen on the GNSS position acquired in the current operation cycle, and having the end point fallen on the predictive position $P_{PRE}$ calculated in the current operation cycle.

Next, the error judging unit 103 calculates a speed of change $V_{GNSS\_PRE}$ from a relative position vector

$P_{GNSS\_PRE}$(t-ΔT), having been calculated in an operation cycle before the latest cycle in which the GNSS data was acquired, to the relative position vector $P_{GNSS\_PRE}$(t) calculated in the current operation cycle, according to the equation below (S202).

[Math. Formula 3]

$$V_{GNSS\_PRE}(t) = \left| P_{GNSS\_PRE}(t) - P_{GNSS\_PRE}(t - \Delta T) \right| / \Delta T$$

Where, ΔT represents a duration of time from a time point the relative position vector $P_{GNSS\_PRE}$(t-ΔT) was calculated, up to a time point the relative position vector $P_{GNSS\_PRE}$(t) was calculated. ΔT in this embodiment is preset to several seconds.

After calculation of the speed of change $V_{GNSS\_PRE}$, the error judging unit 103 judges whether the speed of change $V_{GNSS\_PRE}$ is smaller than a predetermined speed threshold value or not (S203).

If the speed of change $V_{GNSS\_PRE}$ is smaller than the speed threshold value (S203, YES), the error judging unit 103 judges that the acquired GNSS position is free of positional error (S204).

On the other hand, if the speed of change $V_{PRE}$ is not smaller than the speed threshold value (S203, NO), the error judging unit 103 judges that the acquired GNSS position contains positional error (S205).

By thus judging whether the GNSS position contains positional error or not, with reference to the speed of change of the relative position vector $P_{GNSS\_PRE}$, it now becomes possible to detect more minor positional error, as compared with judgement with reference to the distance of change of the GNSS position.

(Correction Speed Vector Calculation Process)

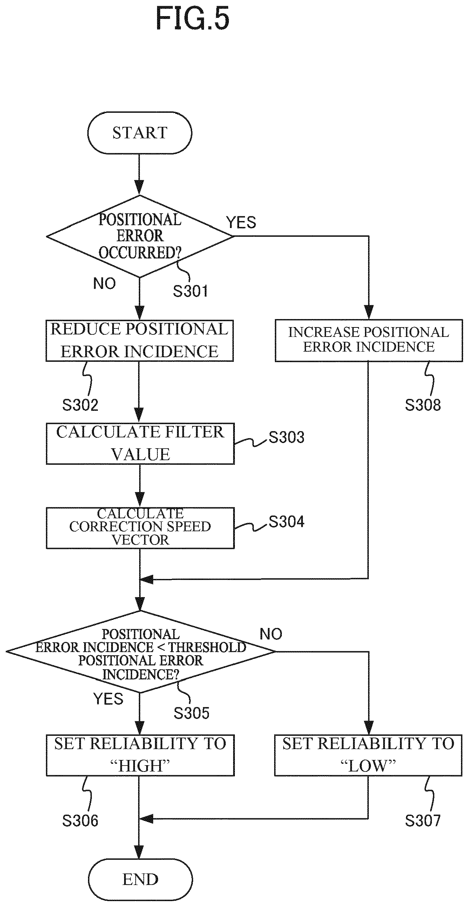

The correction speed vector calculation process will be explained. FIG. 5 is a flow chart illustrating operations of the correction speed vector calculation process.

As illustrated in FIG. 5, first, the correction amount calculation unit 104 judges whether the GNSS position was judged to contain positional error by the error judgment process (S301).

If the GNSS position is free of positional error (S301, NO), the correction amount calculation unit 104 reduces the positional error rate which indicates incidence of the positional error (S302). The positional error rate in this embodiment shall be reset to zero, upon startup of the position correction apparatus 1.

Next, the correction amount calculation unit 104 calculates a filter value $PF_{GNSS\_PRE}$ with reference to the relative position vector $P_{GNSS\_PRE}$ (S303), and then calculates the correction speed vector $V_{cor}$ with reference to the filter value $PF_{GNSS\_PRE}$ (S304). The filter value $PF_{GNSS\_PRE}$ is calculated by reducing the individual high-frequency components in the south-north position and the east-west position, which are the components that constitute the relative position vector $P_{GNSS\_PRE}$, with use of a low-pass filter. The correction speed vector $V_{cor}$ is calculated by the equation below.

[Math. Formula 4]

$$V_{cor}(t) = (PF_{GNSS\_PRE}(t) - PF_{GNSS\_PRE}(t - \delta t)) / \delta t$$

Where, $PF_{GNSS\_PRE}$(t) is a filter value calculated in the current operation cycle, and $PF_{GNSS\_PRE}$(t-δt) is a filter value calculated in an operation cycle in which the GNSS data was acquired for the previous time.

The correction amount calculation unit 104 also judges whether the positional error rate in the current operation cycle is smaller than a predetermined positional error rate or not (S305).

If the positional error rate is smaller than the threshold value of the positional error rate (S305, YES), the correction amount calculation unit 104 sets the reliability of the current position, calculated in the current operation cycle, to "high" (S306). On the other hand, if the positional error rate is not smaller than the threshold value of the positional error rate (S305, NO), the correction amount calculation unit 104 sets the reliability of the current position, calculated in the current operation cycle, to "low" (S307).

The reliability is correlated to the current position and output from the position correction apparatus 1, and is used together with the current position in an external device. For example, one possible method of use may be such that the external device employs the current position if the reliability thereof is "high", and does not employ the current position if the reliability thereof is "low". Note that the degree of reliability may only be represented by two or more grades.

If the GNSS position was judged to contain positional error in step S301 (S301, YES), the correction amount calculation unit 104 increases the positional error rate (S308), and judges whether the positional error rate in the current operation cycle is smaller than a preset threshold value of the positional error rate, without calculating the correction speed vector $V_{cor}$ (S305).

By thus calculating the correction speed vector $V_{cor}$, only when the GNSS position does not contain positional error, it now becomes possible to enhance accuracy of the correction position vector $P_{cor}$ calculated from the correction speed vector $V_{cor}$.

(Initialization Process)

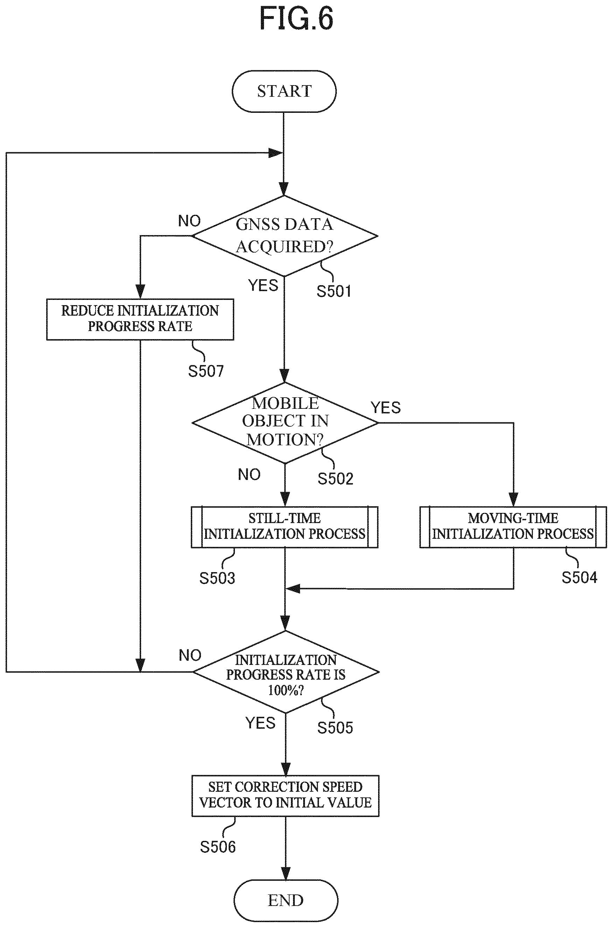

An initialization process according to the first embodiment will be explained. FIG. 6 is a flow chart illustrating an initialization process according to this embodiment.

As described previously, the initialization process is a process conducted upon startup of the position correction apparatus 1, to calculate an initial value of the correction speed vector $V_{cor}$.

As illustrated in FIG. 6, first, the GNSS data acquisition unit 101 judges whether the GNSS data output from the GNSS receiver 2 was acquired or not (S501).

If the GNSS data was acquired (S501, YES), the movement judging unit 106 judges whether the mobile object is in motion or not, with reference to the GNSS speed of the mobile object contained in the GNSS data (S502). Now, the movement judging unit 106 judges that the mobile object is in motion, if the GNSS speed is equal to or larger than a predetermined threshold value.

If the mobile object is not in motion, or stands still (S502, NO), the correction amount calculation unit 104 conducts a still-time initialization process (S503). The still-time initialization process is a process for calculating a correction speed vector from an average value of a speed vector of the mobile object with reference to the GNSS speed, where the average value is calculated for every still-time initialization process. The still-time initialization process also increases an initialization progress rate that indicates a progress rate of initialization. A method for estimating the initialization progress rate will be described later.

On the other hand, if the mobile object is in motion (S502, YES), the error judging unit 103 and the correction amount calculation unit 104 conduct a moving-time initialization process (S504). The moving-time initialization process conducts the processes corresponded to steps S103, S104 and S105, to calculate the correction speed vector. The moving-time initialization process also increases the initialization progress rate, similarly to as in the still-time initialization process. The initialization progress rate PR is calculated by the equation below.

[Math. Formula 5]

$$ PR = \left[ \left( \frac{T_{stop}}{T\_S} \right) + \left( \frac{T_{move}}{T\_M} \right) \right] \times 100\% $$

Where, $T_{stop}$ represents a total time over which the still-time initialization process was conducted, $T_{move}$ represents a total time over which the moving-time initialization process was conducted, $T\_S$ represents a time required for calculating the initial value of the correction speed vector only with use of the still-time initialization process, and $T\_M$ represents a time required for calculating the initial value of the correction speed vector only with use of the moving-time initialization process.

After conducting the still-time initialization process or the moving-time initialization process, the correction amount calculation unit 104 judges whether the initialization progress rate has reached 100% or not (S505). As expressed by the equation above, the initialization progress rate is estimated as a total of the progress rate given by the still-time initialization process, and a progress rate given by the moving-time initialization process. In a situation that a motion state of the mobile object changed, with the initialization progress rate fallen below 100%, the correction speed vector being calculated will remain valid. More specifically, the correction speed vector calculated by the still-time initialization process will remain valid for the moving-time initialization process, or, the correction speed vector calculated by the moving-time initialization process will remain valid for the still-time initialization process.

If the initialization progress rate reached 100% (S505, YES), the correction amount calculation unit 104 sets the correction speed vector, being calculated by the still-time initialization process or the moving-time initialization process, as the initial value (S506).

On the other hand, if the initialization progress rate falls under 100% (S505, NO), the GNSS data acquisition unit 101 again judges whether the GNSS data output from the GNSS receiver 2 was acquired or not (S501).

If the GNSS data was not acquired in step S501 (S501, NO), the correction amount calculation unit 104 decreases the initialization progress rate by a predetermined value (S507).

With such initialization process, it now becomes possible to calculate the correction position vector with reference to the correction speed vector, even immediately after startup of the position correction apparatus 1. By thus calculating the correction speed vector depending on a moving status of the mobile object, a more proper initial value of the correction speed vector is obtainable.

Having described in this embodiment that the predictive position and the correction speed vector are determined with use of the GNSS speed, the method of determination is not limited thereto. For example, the predictive position and the correction speed vector may alternatively be determined from a speed of the mobile object obtained with use of a speed sensor such as a vehicle speed sensor, rather than the GNSS speed.

<Second Embodiment>

(Structure of Position Correction Apparatus)

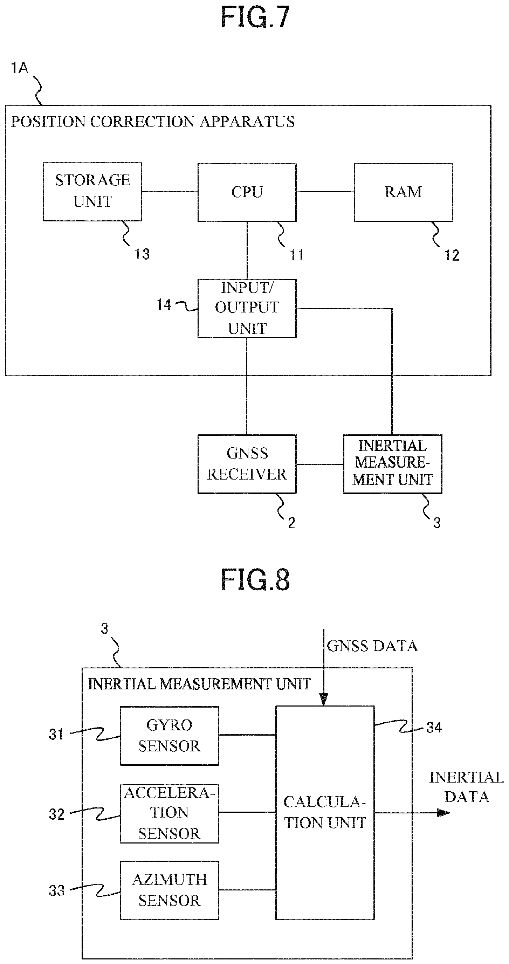

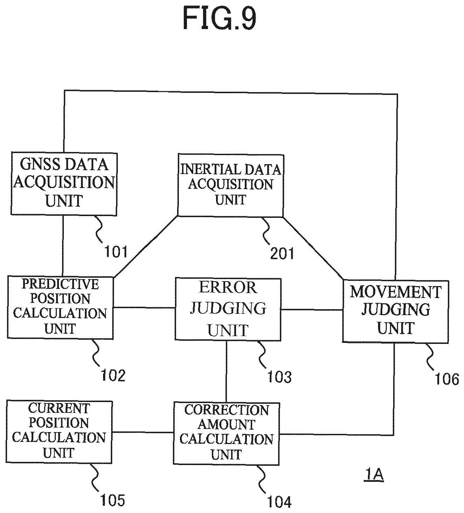

A structure of a position correction apparatus according to a second embodiment will be explained. FIGs. 7 and 9 are block diagrams illustrating a hardware configuration and a functional configuration, respectively, of the position correction apparatus according to this embodiment. FIG. 8 is a block diagram illustrating a hardware configuration of an inertial measurement unit.

As illustrated in FIG. 7, a position correction apparatus 1A of this embodiment is different from the position correction apparatus 1 according to the first embodiment, in a point that the input/output unit 14 in the hardware configuration takes part in data sending/receiving not only to and from the GNSS receiver 2, but also to and from the inertial measurement unit 3 as an external device.

The inertial measurement unit 3, as illustrated in FIG. 8, is a measurement unit mounted on the mobile object together with the GNSS receiver 2, and has a gyro sensor 31, an acceleration sensor 32, a magnetic azimuth sensor 33, and a calculation unit 34. The gyro sensor 31 detects angular velocities around three axes including X-axis, Y-axis and Z-axis, and outputs a gyro signal. The acceleration sensor 32 detects acceleration levels around three axes, and outputs an acceleration signal. The magnetic azimuth sensor 33 detects a magnetic azimuth, and outputs a magnetic azimuth signal.

The calculation unit 34 calculates a coordinate transformation matrix that transforms a body coordinate system of the mobile object having the sensor mounted thereon, to a local coordinate system having the X-axis directed to north, and with the Z-axis aligned with the direction of gravity, at regular refresh intervals shorter than the refresh intervals in the GNSS receiver 2, with reference to the gyro signal, the acceleration signal, and the magnetic azimuth signal. Then the calculation unit 34 integrates the acceleration levels with use of coordinate transformation to calculate an inertial speed, and further integrates the inertial speed to calculate an inertial position. The calculation unit 34 also outputs inertial data that contains the inertial speed and the inertial position.

The calculation unit 34 can eliminate, when calculating the coordinate transformation matrix, an influence of motion acceleration with use of gravitational acceleration detected by the acceleration sensor 32 and the GNSS speed of the mobile object received from the GNSS receiver 2, to correct a level error; and can correct an azimuth error with use of the GNSS azimuth obtained from the GNSS receiver 2 and the magnetic azimuth obtained from magnetic azimuth sensor 33, thereby eliminating the level error and the azimuth error. Such elimination of the level error and azimuth error has been disclosed, for example, in JP 4615287 B.

As illustrated in FIG. 9, the position correction apparatus 1A is different from the position correction apparatus 1 in a point that the functional configuration further includes an inertial data acquisition unit 201. The inertial data acquisition unit 201 acquires inertial data that is output at regular refresh intervals from the inertial measurement unit 3. Other points of difference from the first embodiment include that the predictive position calculation unit 102 calculates the predictive position with reference to the GNSS data and the inertial data, and that the movement judging unit 106 judges whether the mobile object is in motion or not, with reference to the GNSS data or the inertial data.

(Operations of Position Correction Apparatus)

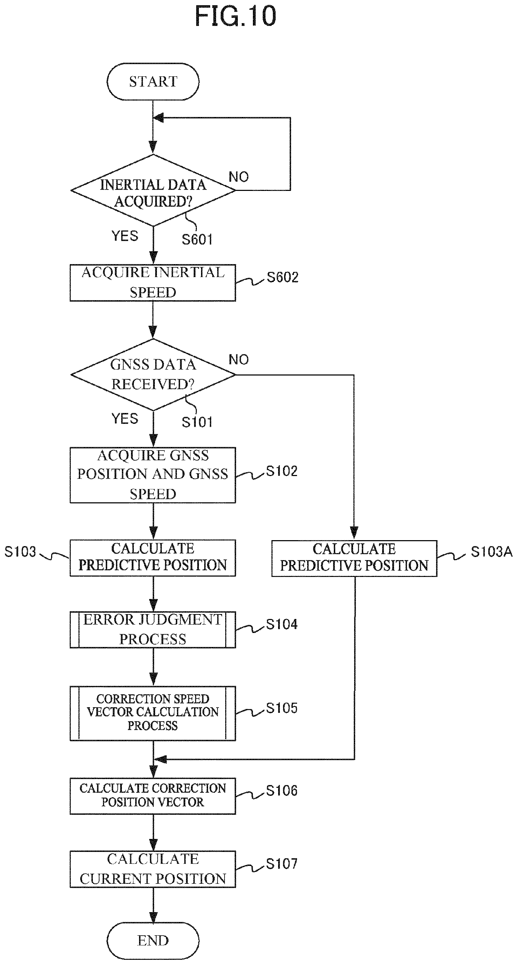

Operations of the position correction apparatus according to the second embodiment will be explained. FIG. 10 is a flow chart illustrating operations of the position correction apparatus of this embodiment. Note that an output interval of the inertial data from the inertial measurement unit is shorter than an output interval of the GNSS data from the GNSS receiver, and longer than the operation cycle of the position correction apparatus.

As illustrated in FIG. 10, first, the inertial data acquisition unit 201 judges whether the inertial data output from the inertial measurement unit 3 was acquired or not (S601).

If the inertial data was acquired (S601, YES), the inertial data acquisition unit 201 acquires the inertial position and the inertial speed of the mobile object contained in the inertial data (S602).

After acquisition of the inertial position and the inertial speed, the GNSS data acquisition unit 101 judges whether the GNSS data output from the GNSS receiver 2 was acquired or not (S101).

If the GNSS data was acquired (S101, YES), an operation of step S102 is conducted similarly as in the first embodiment. In steps S103 to S105, the operations are conducted similarly to as in the first embodiment, with some differences from the first embodiment in that the predictive position is further calculated with reference to the inertial speed, rather than the GNSS speed (S103), that the error judgment process is conducted to judge whether the GNSS position is free of error or not, with reference to the predictive position having been calculated for the inertial data acquired for the previous time (S104), and that, if the GNSS position was judged to be free of error, the correction speed vector is calculated with reference to the speed of change of the relative position between the predictive position calculated from the inertial speed, and the GNSS position (S105). After calculation of the correction speed vector, operations in steps S106 and S107 are conducted similarly to as in the first embodiment.

On the other hand, if the GNSS data was not acquired (S101, NO), the predictive position calculation unit 102 calculates the predictive position with reference to the inertial speed (S103A). Now, the predictive position calculation unit 102 calculates a new predictive position, by adding a vector, obtained by multiplying the duration of time from the time point the inertial data was acquired for the previous time up to the current time point and the inertial speed, to the current position. Note that the predictive position calculation unit 102 calculates the new predictive position, while assuming the latest predictive position from among the already calculated predictive positions, or the initial position, as the current position.

If the inertial data was not acquired in step S601 (S601, NO), the inertial data acquisition unit 201 again judges whether the inertial data output from the inertial measurement unit 3 was acquired or not (S601).

After calculation of the predictive position with reference to the inertial speed, the operations of steps S106 and S107 are conducted. Now in step S106, the correction position vector is calculated with use of the correction speed vector derived from the inertial data acquired most recently. In step S107, the predictive position derived from the inertial speed is corrected with the correction position vector calculated in step S106, to estimate the current position.

By thus using not only the GNSS data but also the inertial data for the calculation of the predictive position, it now becomes possible to calculate the predictive position at a timing the GNSS data is not acquired, and, by thus correcting the predictive position with the correction position vector calculated with use of the correction speed vector derived from the inertial data acquired most recently, it now becomes possible to calculate the current position.

(Initialization Process)

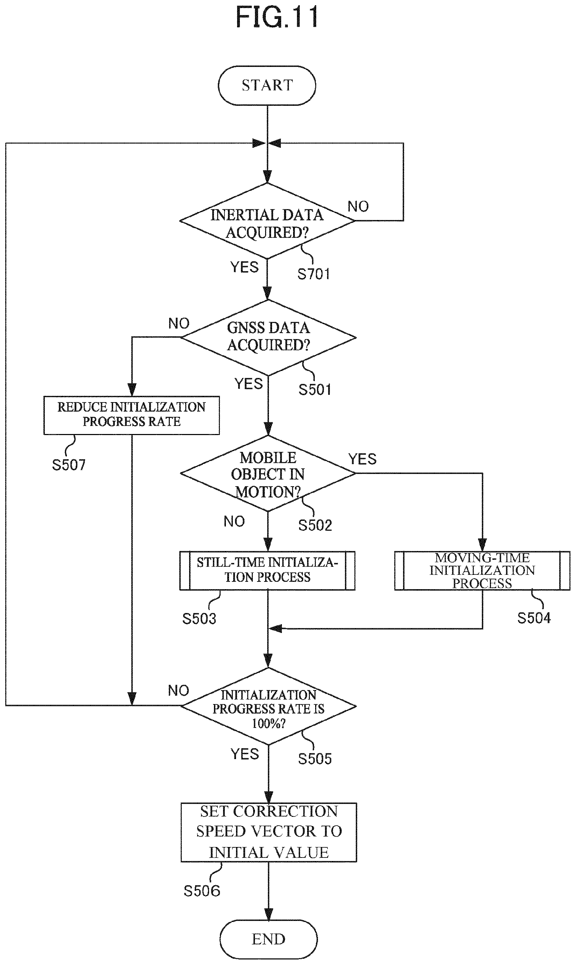

Operations of the initialization process according to the second embodiment will be explained. FIG. 11 is a flow chart illustrating operations of the initialization process according to this embodiment.

As illustrated in FIG. 11, first, the inertial data acquisition unit 201 judges whether the inertial data output from the inertial measurement unit 3 was acquired or not (S701).

If the inertial data was not acquired (S701, NO), the inertial data acquisition unit 201 again judges whether the inertial data output from the inertial measurement unit 3 was acquired or not (S701).

On the other hand, if the inertial data was acquired (S701, YES), the operations of step S501 and thereafter are conducted similarly to as in the first embodiment, where the operations of the still-time initialization process and the moving-time initialization process are different from those in the first embodiment.

The still-time initialization process with the inertial data having been acquired is different from the first embodiment in a point that the average value of a speed vector of the mobile object is calculated with reference to the inertial speed, rather than the GNSS speed. Meanwhile, the moving-time initialization process, with the inertial data having been acquired, is different from the first embodiment in a point that the predictive position calculated from the inertial speed, rather than the GNSS speed, is used for calculating the correction speed vector in the processes corresponded to those in steps S103, S104 and S105. Note that the initial value derived from the inertial data is calculated independently of the initial value derived from the GNSS data.

By thus using not only the GNSS data but also the inertial data for the calculation of the correction speed vector as the initial value, it now becomes possible to calculate the initial value at a timing the GNSS data is not acquired.

The embodiments of this invention are merely exemplary ones, and are not intended to limit the scope of the invention. These novel embodiments may be implemented in other various ways, and may be partially omitted, replaced or modified without departing from the spirit of the invention. Also these embodiments and modifications thereof fall within the scope and essence of this invention, and also fall within the inventions described in claims and the equivalents.

REFERENCE SIGNS LIST

1        position correction apparatus
101     GNSS data acquisition unit
102     predictive position calculation unit

103    error judging unit
104    correction amount calculation unit
105    current position calculation unit

**Claims**

1.  A position correction apparatus structured to correct a current position of a mobile object output from a GNSS receiver, the apparatus comprising:

    a data acquisition unit structured to periodically acquire a GNSS position output from the GNSS receiver and speed of the mobile object;
    a predictive position calculation unit structured to calculate a predictive position of the mobile object, with reference to the speed having been acquired for the previous time;
    an error judging unit structured to calculate a relative position vector that indicates a relative position between a GNSS position acquired in a current cycle and a predictive position derived from the speed having been acquired for the previous time, and to judge that the acquired GNSS position is free of error, if the speed of change, from a relative position vector having been calculated in a cycle prior to the previous time, to the relative position vector calculated in the current cycle, is smaller than a predetermined speed threshold value;
    a correction amount calculation unit structured to calculate a correction speed vector which is a speed vector derived from the relative position vector calculated in the current cycle, the relative position vector having been calculated for the previous time, and a duration of time from a time point the relative position vector was calculated for the previous time up to the current cycle, if the GNSS position has been judged to be free of error; and
    a current position calculation unit structured to calculate, as the current position of the mobile object, a position obtained by correcting the predictive position calculated in the current cycle, with an integrated value of the correction speed vector.

2.  The position correction apparatus according to claim 1, wherein the predictive position calculation unit is structured to calculate the predictive position of the mobile object, with reference to the predictive position having been calculated for the previous time or the GNSS position acquired in the current cycle, and to the speed having been acquired for the previous time.

3.  The position correction apparatus according to claim 1 or 2, further comprising a movement judging unit structured to judge whether the mobile object has moved or not with reference to the speed of the mobile object, and
    wherein the correction amount calculation unit is structured to calculate an initial value of the correction speed vector in different ways depending on judgement given by the movement judging unit.

4.  The position correction apparatus according to claim 3, wherein the correction amount calculation unit is structured to calculate an average value of a plurality of periodically acquired speed values, as the initial value, if the mobile object was judged to be standing still.

5.  The position correction apparatus according to claim 3 or 4, wherein the correction amount calculation unit is structured to calculate, as the initial value, a speed vector which is a quotient obtained by dividing a position vector remained after subtracting the relative position vector having been calculated for the previous time from the relative position vector calculated in the current cycle, by a duration of time from a time point the relative position vector was calculated for the previous time, up to the current cycle, if the mobile object was judged to be in motion.

6.  The position correction apparatus according to any one of claims 1 to 5, wherein the correction amount calculation unit is structured to calculate a positional error rate that provides graded indication of occurrence of positional error in the periodically acquired GNSS position, with reference to the judgment given by the error judging unit, and to correlate the positional error rate with the correction speed vector, and
    the current position calculation unit is structured to add the positional error rate correlated to the correction speed vector on which the current position is based, to the current position.

7.  The position correction apparatus according to any one of claims 1 to 6, wherein the correction amount calculation unit is structured to calculate a filter value by reducing a high-frequency components from the individual components that constitute the relative position vector calculated in the current cycle with use of a low-pass filter, to subtract a filter value having been calculated for the previous time from the filter value to obtain a position vector, and to divide the position vector by the duration of time from a time point the relative position vector was calculated for the previous time up to the current cycle, to calculate the correction speed vector.

# FIG.1

1

POSITION CORRECTION APPARATUS

| STORAGE UNIT | CPU | RAM |

13    11    12

INPUT/ OUTPUT UNIT    14

GNSS RECEIVER

2

# FIG.2

GNSS DATA ACQUISI- TION UNIT

101

| PREDICTIVE POSITION CALCULATION UNIT | ERROR JUDGING UNIT | MOVEMENT JUDGING UNIT |

102    103    106

| CURRENT POSITION CALCULATION UNIT | CORRECTION AMOUNT CALCULATION UNIT | |

105    104    1

# FIG.3

START

GNSS DATA
ACQUIRED?                    NO

YES          S101

ACQUIRE GNSS
POSITION AND GNSS            S102
SPEED

CALCULATE                    S103
PREDICTIVE POSITION

ERROR JUDGMENT               S104
PROCESS

CORRECTION SPEED
VECTOR CALCULATION           S105
PROCESS

CALCULATE CORRECTION         S106
POSITION VECTOR

CALCULATE                    S107
CURRENT POSITION

END

# FIG.4

```
        ┌─────────┐
        │  START  │
        └────┬────┘
             │
             ▼
   ┌──────────────────────┐
   │ CALCULATE RELATIVE   │  S201
   │   POSITION VECTOR    │
   └──────────┬───────────┘
              │
              ▼
   ┌──────────────────────┐
   │  CALCULATE SPEED     │  S202
   │    OF CHANGE         │
   └──────────┬───────────┘
              │
              ▼
         ╱────────────╲
        ╱    SPEED     ╲          NO
       ╱ OF CHANGE < SPEED╲──────────────────┐
       ╲   THRESHOLD     ╱                    │
        ╲    VALUE?     ╱                     │
         ╲────────────╱                       │
      YES      │    S203                       │
              ▼                                ▼
   ┌──────────────────────┐      ┌──────────────────────┐
   │ POSITIONAL ERROR     │      │ POSITIONAL ERROR     │
   │   NOT OCCURRED       │      │     OCCURRED         │
   └──────────┬───────────┘      └──────────┬───────────┘
   S204       │                             S205
              │◄────────────────────────────┘
              ▼
        ┌─────────┐
        │   END   │
        └─────────┘
```

# FIG.5

START

↓

POSITIONAL ERROR OCCURRED? — YES →

S301

NO ↓

REDUCE POSITIONAL ERROR INCIDENCE

S302

↓

CALCULATE FILTER VALUE — S303

↓

CALCULATE CORRECTION SPEED VECTOR — S304

INCREASE POSITIONAL ERROR INCIDENCE

S308

↓

POSITIONAL ERROR INCIDENCE < THRESHOLD POSITIONAL ERROR INCIDENCE? — NO →

S305

YES ↓

SET RELIABILITY TO "HIGH"

S306

SET RELIABILITY TO "LOW"

S307

↓

END

# FIG.6

START

GNSS DATA
ACQUIRED?  S501

NO

YES

REDUCE INITIALIZATION
PROGRESS RATE

S507

MOBILE
OBJECT IN
MOTION?  S502

YES

NO

STILL-TIME
INITIALIZATION PROCESS

S503

MOVING-TIME
INITIALIZATION PROCESS

S504

INITIALIZATION
PROGRESS RATE IS
100%?  S505

NO

YES

SET CORRECTION SPEED
VECTOR TO INITIAL VALUE

S506

END

# FIG.7

POSITION CORRECTION APPARATUS 1A

| STORAGE UNIT | CPU | RAM |

13    11    12

INPUT/ OUTPUT UNIT 14

GNSS RECEIVER 2

INERTIAL MEASURE-MENT UNIT 3

# FIG.8

3

GNSS DATA

INERTIAL MEASUREMENT UNIT

GYRO SENSOR 31

ACCELERA-TION SENSOR 32

AZIMUTH SENSOR 33

CALCULA-TION UNIT 34

INERTIAL DATA

# FIG.9

```
┌─────────────┐        ┌─────────────┐
│  GNSS DATA  │        │INERTIAL DATA│
│ ACQUISITION │        │ ACQUISITION │
│    UNIT     │        │    UNIT     │
└─────────────┘        └─────────────┘
       101                   201

┌─────────────┐   ┌─────────────┐   ┌─────────────┐
│ PREDICTIVE  │   │   ERROR     │   │  MOVEMENT   │
│  POSITION   │   │  JUDGING    │   │  JUDGING    │
│ CALCULATION │   │    UNIT     │   │    UNIT     │
│    UNIT     │   │             │   │             │
└─────────────┘   └─────────────┘   └─────────────┘
       102              103                106

┌─────────────┐   ┌─────────────┐
│   CURRENT   │   │ CORRECTION  │
│  POSITION   │   │   AMOUNT    │
│ CALCULATION │   │ CALCULATION │
│    UNIT     │   │    UNIT     │
└─────────────┘   └─────────────┘       1A
       105              104
```

# FIG.10

```
                    ┌─────────┐
                    │  START  │
                    └────┬────┘
                         │ ◄──────────────┐
                         ▼                 │
                  ╱ INERTIAL DATA ╲   NO   │
                 ◄   ACQUIRED?    ►────────┘
                  ╲              ╱
                    YES    S601
                     │
                     ▼
              ┌──────────────────┐
              │ ACQUIRE INERTIAL │  S602
              │      SPEED       │
              └────────┬─────────┘
                       │
                       ▼
                 ╱  GNSS DATA  ╲    NO
                ◄  RECEIVED?   ►──────────────────┐
                 ╲            ╱                    │
                   YES    S101                     │
                    │                              │
                    ▼                              │
           ┌──────────────────┐                    │
           │  ACQUIRE GNSS     │  S102             │
           │ POSITION AND GNSS │                    │
           │      SPEED        │                    │
           └────────┬──────────┘                    │
                    │                               │
                    ▼                               ▼
    S103   ┌──────────────────┐      ┌──────────────────┐
           │   CALCULATE      │      │    CALCULATE     │  S103A
           │PREDICTIVE POSITION│      │PREDICTIVE POSITION│
           └────────┬─────────┘      └────────┬─────────┘
                    │                          │
                    ▼                          │
           ┌──────────────────┐                │
           │ ERROR JUDGMENT   │  S104          │
           │    PROCESS       │                │
           └────────┬─────────┘                │
                    │                          │
                    ▼                          │
           ┌──────────────────┐                │
           │ CORRECTION SPEED │  S105          │
           │VECTOR CALCULATION│                │
           │    PROCESS       │                │
           └────────┬─────────┘                │
                    │ ◄────────────────────────┘
                    ▼
           ┌──────────────────┐
           │CALCULATE CORRECTION│ S106
           │ POSITION VECTOR   │
           └────────┬─────────┘
                    │
                    ▼
           ┌──────────────────┐
           │   CALCULATE      │  S107
           │ CURRENT POSITION │
           └────────┬─────────┘
                    │
                    ▼
               ┌─────────┐
               │   END   │
               └─────────┘
```

# FIG.11

```
                        ┌─────────┐
                        │  START  │
                        └────┬────┘
                             │
              ┌──────────────┤◄──────────────┐
              │              ▼               │
              │         ╱─────────╲   NO      │
              │        ╱ INERTIAL  ╲──────────┘
              │        ╲  DATA     ╱
              │         ╲ACQUIRED?╱
              │          ╲───┬───╱
              │         YES  │   S701
              │              ▼
              │         ╱─────────╲
          NO  │        ╱   GNSS    ╲
    ┌─────────┼───────╱    DATA     ╲
    │         │       ╲  ACQUIRED?  ╱
    │         │        ╲───┬───────╱
    │         │        YES │  S501
    ▼         │            ▼
┌─────────────┐      ╱─────────────╲   YES
│REDUCE       │     ╱    MOBILE      ╲──────────┐
│INITIALIZATION│    ╲   OBJECT IN    ╱          │
│PROGRESS RATE│     ╲   MOTION?     ╱           │
└──────┬──────┘      ╲───┬─────────╱            │
       │           NO │    S502                 │
     S507             ▼                         ▼
    │         ┌───────────────────┐    ┌──────────────────┐
    │         │STILL-TIME INITIALIZA-│  │  MOVING-TIME      │
    │         │TION PROCESS        │    │  INITIALIZATION   │
    │         └─────────┬─────────┘    │  PROCESS          │
    │              S503 │              └────────┬─────────┘
    │                   │                   S504│
    │                   ▼◄──────────────────────┘
    │              ╱─────────────╲
    │         NO  ╱ INITIALIZATION╲
    └───────────╱  PROGRESS RATE IS╲
                ╲      100%?       ╱
                 ╲───┬────────────╱
                 YES │   S505
                     ▼
            ┌──────────────────┐
            │  SET CORRECTION   │
            │  SPEED VECTOR TO  │
            │  INITIAL VALUE    │
            └─────────┬────────┘
                 S506 │
                      ▼
                 ┌─────────┐
                 │   END   │
                 └─────────┘
```

## INTERNATIONAL SEARCH REPORT

| International application No. |
| --- |
| **PCT/JP2022/014317** |

**A.    CLASSIFICATION OF SUBJECT MATTER**

*G01S 19/40*(2010.01)i; *G01S 19/45*(2010.01)i
FI:    G01S19/40; G01S19/45

According to International Patent Classification (IPC) or to both national classification and IPC

**B.    FIELDS SEARCHED**

Minimum documentation searched (classification system followed by classification symbols)

G01S 19/00 - G01S 19/55, G01C 21/00 - G01C 21/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2013/084987 A1 (TOKYO KEIKI INC) 13 June 2013 (2013-06-13) paragraphs [0026]-[0040], fig. 3 | 1-7 |
| A | JP 2007-240532 A (HONEYWELL INTERNATL INC) 20 September 2007 (2007-09-20) paragraphs [0011], [0036]-[0037], fig. 1 | 1-7 |
| A | JP 8-313278 A (PIONEER ELECTRONIC CORP) 29 November 1996 (1996-11-29) paragraphs [0002]-[0012], fig. 4 | 1-7 |

☐ Further documents are listed in the continuation of Box C.        ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **13 May 2022** | **24 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

<table>
<tr><td colspan="2" align="center">**INTERNATIONAL SEARCH REPORT**<br>**Information on patent family members**</td><td colspan="2">International application No.<br><br>**PCT/JP2022/014317**</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>WO    2013/084987  A1</td><td align="center">13 June 2013</td><td>US    2014/0365117  A1<br>paragraphs [0049]-[0066], fig. 3<br>EP    2790036  A1<br>JP    2013-122406  A<br>JP    5122678  B1</td><td></td></tr>
<tr><td>JP    2007-240532  A</td><td align="center">20 September 2007</td><td>US    2007/0213933  A1<br>paragraphs [0014], [0031]-[0032], fig. 1<br>US    2010/0036613  A1<br>EP    1837627  A2<br>JP    5046687  B2</td><td></td></tr>
<tr><td>JP    8-313278  A</td><td align="center">29 November 1996</td><td>JP    3784855  B2</td><td></td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5122678 B

- JP 4615287 B